# EUROPÄISCHE PATENTSCHRIFT

(11) **EP 3 546 294 B1**
(45) Veröffentlichungstag und Bekanntmachung des Hinweises auf die Patenterteilung: **20.01.2021**
(21) Anmeldenummer: 19164737.9
(22) Anmeldetag: 22.03.2019
(51) Int. Cl.: B60R 3/02

(54) **KLAPPTREPPE**
FOLDING STAIRWAY
MARCHEPIED ESCAMOTABLE

(30) Priorität: 29.03.2018 DE 202018101786 U
(43) Veröffentlichungstag der Anmeldung: 02.10.2019
(73) Patentinhaber: Böckmann Fahrzeugwerke GmbH, 49688 Lastrup (DE)
(72) Erfinder: Böckmann, Klaus, 49688 Lastrup (DE)
(74) Vertreter: Eisenführ Speiser

(56) Entgegenhaltungen:
- EP-A1- 3 415 413
- SE-B- 464 234
- US-A- 3 067 835
- US-A- 4 720 116
- US-A- 5 397 143
- US-A1- 2009 020 360

## Beschreibung

Die Erfindung bezieht sich auf eine Klapptreppe. Des Weiteren bezieht sich die Erfindung auf ein Reisemobil, das eine erfindungsgemäße Klapptreppe aufweist.

Das Patent US 5,397,143 beschreibt eine Treppe, die an der Außenwand eines Fahrzeugs befestigt ist und aus einer Nutzposition heraus durch Hochklappen gegen die Außenwand des Fahrzeugs zusammengefaltet werden kann.

In Reisemobilen, wie zum Beispiel Wohnmobilen, Wohnwagen oder Pferdetransportern mit einem Wohnbereich, ist es üblich, aus Platzgründen eine Schlafgelegenheit in einer gewissen Höhe vorzusehen, zum Beispiel oberhalb der Fahrerkabine im Falle eines Wohnmobils oder oberhalb der Stalleinheit im Falle eines Pferdetransporters. Um solche Schlafgelegenheiten zu erreichen, muss aufgrund der Höhe der Schlafgelegenheit eine Aufstiegshilfe vorgesehen werden. Es ist bekannt, eine Aufstiegshilfe in Form einer Treppe vorzusehen, wobei es üblich ist, dass die Treppe nur bei Gebrauch, zum Beispiel mit Haken, an der Schlafmöglichkeit befestigt wird. Werden die Aufstiegshilfen nicht benötigt, zum Beispiel tagsüber, müssen sie in einem anderen Teil des Reisemobils verstaut werden, um nicht die Bewegungsfreiheit der Benutzer des Reisemobils einzuschränken. Das Verstauen der Aufstiegshilfe, die üblicherweise sehr stabil und damit schwer ausgestaltet ist, kostet Stauraum, der somit nicht anderweitig in den ohnehin beengten Verhältnissen eines Reisemobils verwendet werden kann. Es besteht daher der Bedarf, eine Aufstiegshilfe vorzusehen, die, wenn sie nicht gebraucht wird, möglichst wenig Platz und somit Stauraum benötigt.

Es ist daher eine Aufgabe der vorliegenden Erfindung, eine Klapptreppe bereitzustellen, die, wenn sie nicht benötigt wird, möglichst wenig Platz und damit Stauraum einnimmt.

Erfindungsgemäß wird diese Aufgabe durch eine Klapptreppe nach Anspruch 1 gelöst, wobei die Klapptreppe aufweist:
- wenigstens eine Treppenstufe mit einer Oberseite und einer Unterseite,
- ein Haltesystem, geeignet zum Halten der wenigstens einen Treppenstufe, wobei die wenigstens eine Treppenstufe beweglich am Haltesystem angebracht ist, wobei die Klapptreppe dadurch gekennzeichnet ist, dass das Haltesystem dazu geeignet ist, die Klapptreppe so an einer vertikalen Wand anzubringen, dass in dem aufgeklappten Zustand die Oberseite der wenigstens einen Treppenstufe horizontal ausgerichtet ist, um eine Aufstiegshilfe zu bilden, und in dem zugeklappten Zustand die Unterseite der wenigstens einen Treppenstufe parallel mit der Wand ausgerichtet ist. Das Haltesystem umfasst zudem ein Befestigungselement, wobei das Befestigungselement geeignet ist, die Klapptreppe an der Wand anzubringen, und ein Stützelement, wobei das Stützelement dazu geeignet ist, in dem aufgeklappten Zustand die wenigstens eine Treppenstufe zu stützen. Das Stützelement ist mittels eines Drehschubgelenkes am Befestigungselement angebracht und das Drehschubgelenk ist dazu eingerichtet, eine Schubbewegung des Stützelements vertikal entlang des Befestigungselements zu erlauben. Das Befestigungselement weist einen Schienenabschnitt auf, wobei das Stützelement mittels des Drehschubgelenkes an dem Schienenabschnitt des Befestigungselements angebracht ist und das Stützelement dazu geeignet ist, sich mittels des Drehschubgelenkes bei einem Übergang zwischen dem zugeklappten und dem aufgeklappten Zustand entlang des Schienenabschnitts zu bewegen.

Dadurch, dass das Haltesystem dazu geeignet ist, an einer Wand angebracht zu werden, wobei in dem aufgeklappten Zustand die Oberseite der wenigstens einen Treppenstufe horizontal zu der Wand ausgerichtet ist, um eine Aufstiegshilfe zu bilden und wobei in dem zugeklappten Zustand die Unterseite der wenigstens einen Treppenstufe parallel mit der Wand ausgerichtet ist, kann die Treppe, wenn sie nicht gebraucht wird, an der Wand verbleiben, wobei die Treppe in diesem Zustand keinerlei zusätzlichen Stauraum benötigt.

In einer bevorzugten Ausführungsform ist die Klapptreppe dazu geeignet, so an der Wand angebracht zu werden, insbesondere in die Wand eingelassen zu werden, dass in dem zugeklappten Zustand die Unterseite der wenigstens einen Treppenstufe in einer Flucht mit der Wand ausgerichtet ist. Das bedeutet, dass die Unterseite der wenigstens einen Treppenstufe mit der Wand eine Fläche bildet, die Klapptreppe also vollständig in der Wand verschwindet. Für eine solche Konstruktion ist es notwendig, dass zum Anbringen der Klapptreppe eine gewisse Aussparung in der Wand vorgesehen wird, in der die Klapptreppe angebracht werden kann. Bei einer solchen Anbringung muss eine gewisse konstruktionsbedingte Abweichung von der angestrebten Fluchtung zwischen der Wand und der Unterseite der wenigstens einen Treppenstufe toleriert werden. Eine solche Abweichung liegt bevorzugt in einem Bereich von weniger als 5 cm.

Das Haltesystem weist weiter ein Befestigungselement, das dazu geeignet ist, die Klapptreppe an der Wand anzubringen, und ein Stützelement auf, wobei das Stützelement dazu geeignet ist, in dem aufgeklappten Zustand die wenigstens eine Treppenstufe zu stützen. Insbesondere ist das Befestigungselement dazu geeignet, die Klapptreppe dauerhaft, das heißt ohne die Möglichkeit für den Benutzer, die Klapptreppe von der Wand zu entfernen, an der Wand anzubringen. Das Befestigungselement ist bevorzugt dazu geeignet, in die Wand eingelassen zu werden, um die Klapptreppe an der Wand anzubringen. Dabei bedeutet "in die Wand einlassen", dass in der Wand Aussparungen vorgesehen werden, in die das Befestigungselement und die Klapptreppe eingebracht werden können. Das Stützelement ist bevorzugt beweglich am Befestigungselement angeordnet.

Es wird bevorzugt, dass die wenigstens eine Treppenstufe mittels eines ersten Drehgelenkes an dem Befestigungselement und mittels eines zweiten Drehgelenkes an dem Stützelement angebracht ist.

Das Stützelement ist mittels eines Drehschubgelenkes am Befestigungselement angebracht und das Drehschubgelenk ist dazu eingerichtet, eine Schubbewegung des Stützelements vertikal entlang des Befestigungselements zu erlauben. Das Befestigungselement weist einen Schienenabschnitt auf, wobei das Stützelement mittels des Drehschubgelenkes an dem Schienenabschnitt des Befestigungselements angebracht ist und das Stützelement dazu geeignet ist, sich mittels des Drehschubgelenkes bei einem Übergang zwischen dem zugeklappten und dem aufgeklappten Zustand entlang des Schienenabschnitts zu bewegen. Insbesondere wird bevorzugt, dass der Schienenabschnitt des Befestigungselements dazu eingerichtet ist, in dem zugeklappten Zustand das Stützelement vollständig aufzunehmen, um ein Ausrichten der Unterseite der wenigstens einen Treppenstufe an der Wand zu ermöglichen.

In einer weiteren Ausführungsform weist das Stützelement weiter einen ersten Abschnitt und einen zweiten Abschnitt auf, wobei der erste Abschnitt beweglich an dem Befestigungselement und die wenigstens eine Treppenstufe beweglich an dem zweiten Abschnitt angeordnet ist, wobei der erste Abschnitt mit dem zweiten Abschnitt über ein Drehgelenk verbunden ist und in einem aufgeklappten Zustand der erste Abschnitt einen Winkel mit der Wand bildet und der zweite Abschnitt vertikal parallel zur Wand verläuft. Dabei ist der Winkel, den der erste Abschnitt mit der Wand bildet größer als 0° und kleiner als 90°. In einer besonders bevorzugten Ausführungsform beträgt der Winkel 30°. In einer weiteren besonders bevorzugten Ausführungsform sind der erste Abschnitt und der zweite Abschnitt jeweils als Rohr oder Stange mit rechteckigem Querschnitt ausgebildet.

Des Weiteren wird bevorzugt, dass das Befestigungselement einen ersten Magneten aufweist und das Stützelement einen zweiten Magneten aufweist, wobei die Magneten verdeckt so angeordnet und eingerichtet sind, dass in dem zugeklappten Zustand die Magneten die Klapptreppe in dem zugeklappten Zustand halten.

Es wird außerdem bevorzugt, dass sich der Abstand zwischen der Oberseite und der Unterseite der wenigstens einen Treppenstufe im aufgeklappten Zustand mit zunehmender Entfernung von der Wand verringert. Dies hat den Vorteil, dass die Treppenstufen im zugeklappten Zustand den sich hinter den Stufen befindlichen Teil der Wand bzw. Teil der Rückwand der Aussparung in der Wand nicht berühren. Während einer Fahrt mit einem Reisemobil, in das die Klapptreppe eingebaut ist, können so die Stufen nicht durch kleine Bewegungen oder durch Ruckeln die Wand auf Dauer beschädigen oder abnutzen. Außerdem wird so bei unruhiger Fahrt ein Klappern der Stufen an der Wand vermieden.

Insbesondere wird bevorzugt, dass die Klapptreppe mehrere Treppenstufen aufweist, wobei Treppenstufen unterhalb einer obersten Treppenstufe bei gleichbleibender Stufenbreite eine größere Trittfläche aufweisen als die oberste Treppenstufe. Die Trittfläche wird dabei gebildet aus der Stufenbreite und der Stufentiefe, wobei die Stufenbreite parallel zur Wand und die Stufentiefe von der Wand bis zur von der Wand abgewandten Kante der Stufe gemessen wird. Besonders bevorzugt weisen die Treppenstufen unterhalb der obersten Treppenstufe eine größere Stufentiefe als die oberste Treppenstufe auf.

In einer weiteren bevorzugten Ausführungsform ist das Befestigungselement ein erstes Befestigungselement und das Haltesystem weist ein zweites Befestigungselement auf, wobei das erste und zweite Befestigungselement entsprechend zueinander ausgeführt sind und das erste und zweite Befestigungselement jeweils auf gegenüberliegenden Seiten der wenigstens einen Treppenstufe angeordnet ist. Weiter wird bevorzugt, dass das Stützelement ein erstes Stützelement ist und das Haltesystem weiter ein zweites Stützelement aufweist, wobei das erste und das zweite Stützelement entsprechend zueinander ausgeführt sind und das erste und das zweite Stützelement jeweils auf gegenüberliegenden Seiten der wenigstens einen Treppenstufe angeordnet ist.

Die oben genannte Aufgabe wird des Weiteren durch ein Reisemobil, insbesondere einen Pferdetransporter mit einem Wohnbereich, das eine Wand mit einer erfindungsgemäßen Klapptreppe aufweist, gelöst.

Es sollte verstanden werden, dass die Klapptreppe nach Anspruch 1 und das Reisemobil nach Anspruch 12 ähnliche und/oder identische bevorzugte Ausführungsformen aufweisen, wie sie insbesondere in den abhängigen Ansprüchen definiert sind.

Im Folgenden werden Ausführungsformen der Erfindung unter Bezugnahme auf nachfolgende Figuren beschrieben, wobei
- Fig. 1: schematisch und exemplarisch eine Ausführungsform der Klapptreppe in einem aufgeklappten Zustand zeigt,
- Fig. 2: schematisch und exemplarisch eine Ausführungsform der Klapptreppe in einem Zustand zwischen dem aufgeklappten und dem zugeklappten Zustand zeigt,
- Fig. 3: schematisch und exemplarisch eine Ausführungsform der Klapptreppe im zugeklappten Zustand zeigt, und
- Fig. 4: schematisch und exemplarisch einen vergrößerten Ausschnitt einer Ausführungsform der Klapptreppe in einem halb aufgeklappten und einem zugeklappten Zustand zeigt.

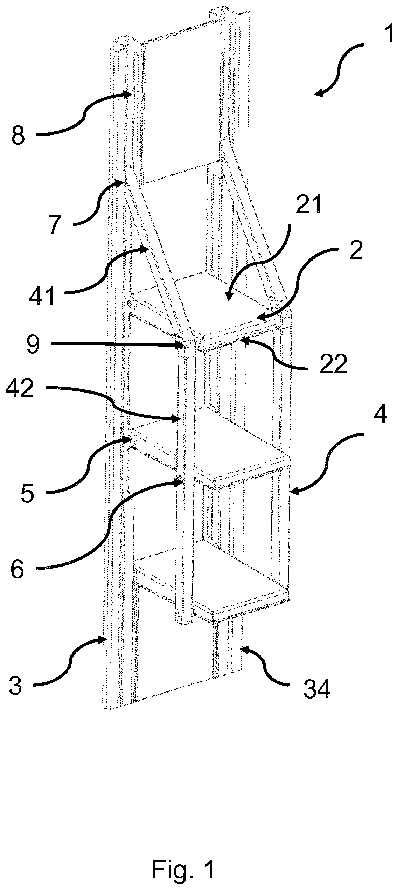

Fig. 1 zeigt schematisch und exemplarisch eine Ausführungsform der Klapptreppe in einem aufgeklappten Zustand, wobei Fig. 1 für eine bessere Darstellbarkeit die Wand, an der die Klapptreppe angebracht ist, nicht zeigt. Die Klapptreppe 1 umfasst in dieser Ausführungsform drei Treppenstufen 2, wobei jede Treppenstufe jeweils eine Oberseite 21 und eine Unterseite 22 aufweist. Weiter weist die Klapptreppe 1 ein Haltesystem 34 auf, dass ein Befestigungselement 3 und ein Stützelement 4 aufweist.

In der hier gezeigten Ausführungsform sind jeweils ein Befestigungselement 3 und ein Stützelement 4 auf jeder Seite der Treppenstufe 2 vorgesehen. Dabei sind die jeweiligen beiden Befestigungselemente 3 und Stützelemente 4 im Wesentlichen gleich aufgebaut. Im Wesentlichen gleich beinhaltet, dass die Elemente die jeweils gleiche Funktion erfüllen und die gleichen Bestandteile und Konstruktionselemente aufweisen, aber, wenn notwendig, eine spiegelverkehrte Anordnung der einzelnen Bestandteile oder Konstruktionselemente aufweisen können. Aus diesem Grund werden einzelne Bestandteile der Elemente in den Figuren auch mit den gleichen Symbolen bezeichnet, wobei aus Gründen der Übersichtlichkeit nicht auf jeder Seite alle Bestandteile bezeichnet werden. Das Vorsehen von jeweils zwei Befestigungs- und Stützelementen in der hier gezeigten Form erhöht die Stabilität der Klapptreppe. Im Folgenden wird jeweils eins der Elemente genauer beschrieben.

Das Befestigungselement 3 wird in dieser Ausführungsform durch eine längliche Metallkonstruktion gebildet, wobei das Befestigungselement 3 in einem oberen Abschnitt in Form eines Schienenelements 8 ausgebildet ist. Das Befestigungselement 3 ist dazu geeignet, in dafür vorgesehene Auslassungen in einer Wand eingelassen zu werden und die Klapptreppe somit dauerhaft und stabil an der Wand anzuordnen, insbesondere zu befestigen.

Das Stützelement 4 weist in der hier gezeigten Ausführungsform einen ersten Abschnitt 41 und einen zweiten Abschnitt 42 auf, wobei der erste und der zweite Abschnitt 41, 42 als Metallrohr mit rechteckigem Querschnitt ausgeführt sind. Der erste Abschnitt 41 und der zweite Abschnitt 42 des Stützelements 4 sind durch ein Drehgelenk 9 miteinander verbunden. Das Drehgelenk 9 ermöglicht es dem ersten Abschnitt 41 und dem zweiten Abschnitt 42 somit, gegeneinander eine Drehbewegung aufzuführen. Weiter ist der erste Abschnitt 41 und somit das Stützelement 4 über ein Drehschubgelenk 7 mit dem Schienenabschnitt 8 des Befestigungselements 3 verbunden. Das Drehschubgelenk 7 ermöglicht dem ersten Abschnitt 41 des Stützelements 4 sowohl eine Drehbewegung bezüglich des Befestigungselements 3 als auch eine Schubbewegung vertikal entlang des Befestigungselements 3.

Die Treppenstufen 2 sind mittels eines ersten Drehgelenkes 5 am Befestigungselement 3 und somit an der Wand angebracht. Des Weiteren sind die Treppenstufen 2 mittels eines zweiten Drehgelenkes 6 am zweiten Abschnitt 42 des Stützelements 4 angebracht. Im Falle der obersten Treppenstufe fallen das Drehgelenk 9 zur Verbindung des ersten Abschnitts 41 und des zweiten Abschnitts 42 des Stützelements 4 und das zweite Drehgelenk 6 der Treppenstufen 2 zusammen und bilden ein gemeinsames Drehgelenk.

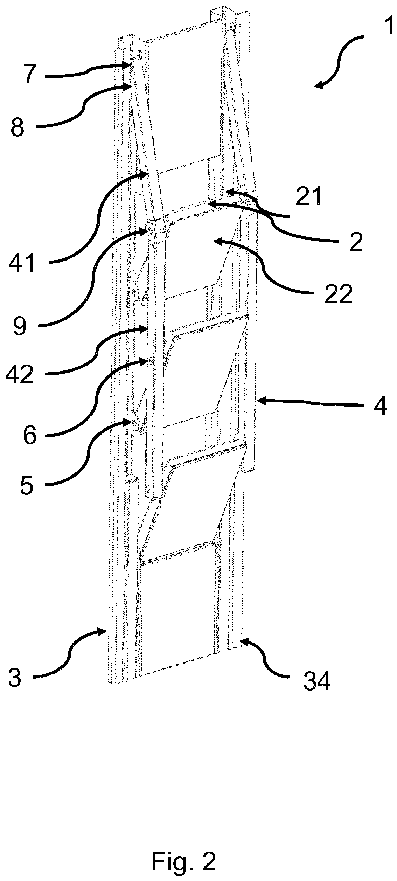

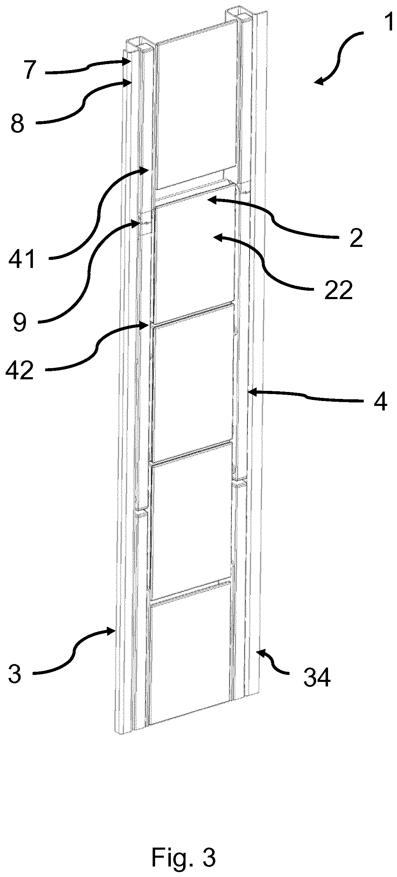

Die erfindungsgemäße Funktion der Klapptreppe beim Übergang zwischen dem aufgeklappten Zustand, wie in Fig. 1 gezeigt, und dem zugeklappten Zustand, wie in Fig. 3 gezeigt, wird im Folgenden anhand von Fig. 2 verdeutlicht. Fig. 2 zeigt schematisch und exemplarisch die gleiche Ausführungsform der Klapptreppe wie Fig. 1, wobei sich die Klapptreppe in Fig. 2 in einem Zustand zwischen dem aufgeklappten und dem zugeklappten Zustand befindet. Somit sind auch in beiden Figuren gleiche Elemente der Klapptreppe mit gleichen Symbolen bezeichnet. In dem aufgeklappten Zustand, wie er in Fig. 1 gezeigt ist, ermöglicht die Klapptreppe einem Benutzer die Verwendung der Oberseite 21 der Treppenstufen 2 als Aufstiegshilfe. Wird eine derartige Aufstiegshilfe nicht benötigt, überführt der Benutzer die Klapptreppe 1 von dem aufgeklappten Zustand in den zugeklappten Zustand. Dabei greift ein Benutzer zum Beispiel eine der Treppenstufen 2 oder den zweiten Abschnitt 42 des Stützelements 4 und schiebt diese nach oben in Richtung Wand. Dadurch wird das Drehschubgelenk 7 und somit auch das Stützelement 4 nach oben bewegt. Gleichzeitig begrenzen die ersten Drehgelenke 5, mit denen die Treppenstufen 2 am Befestigungselement 3 angebracht sind, die Bewegung der Treppenstufen 2 zu einer Drehbewegung um das Drehgelenk 5. Die von der Wand entfernten Teile der Treppenstufen 2 und somit auch die zweiten Drehgelenke 6 der Treppenstufen 2 bewegen sich halbkreisförmig in Richtung Wand. Diese Bewegung wird durch das Drehschubgelenk 7 und das Drehgelenk 9 unterstützt und stabilisiert. Am Ende dieser Bewegung befindet sich die Klapptreppe 1 in dem zugeklappten Zustand 1 wie in Fig. 3 gezeigt.

Fig. 3 verdeutlicht, dass in dem zugeklappten Zustand der Schienenabschnitt 8 des Befestigungselements 3 so eingerichtet ist, das Stützelement 4 vollständig aufzunehmen. In diesem Zustand befindet sich das Drehschubgelenk 7 des Stützelements 4 in seiner höchsten Position, und das Drehgelenk 9 ist gestreckt, das heißt, der erste Abschnitt 41 und der zweite Abschnitt 42 des Stützelements 4 sind in einer geraden Linie ausgerichtet. Die Treppenstufen 2 sind somit in die Wand eingelassen, und die Unterseiten 22 der Treppenstufen sind an dem Befestigungselement 3 und somit auch an der Wand ausgerichtet.

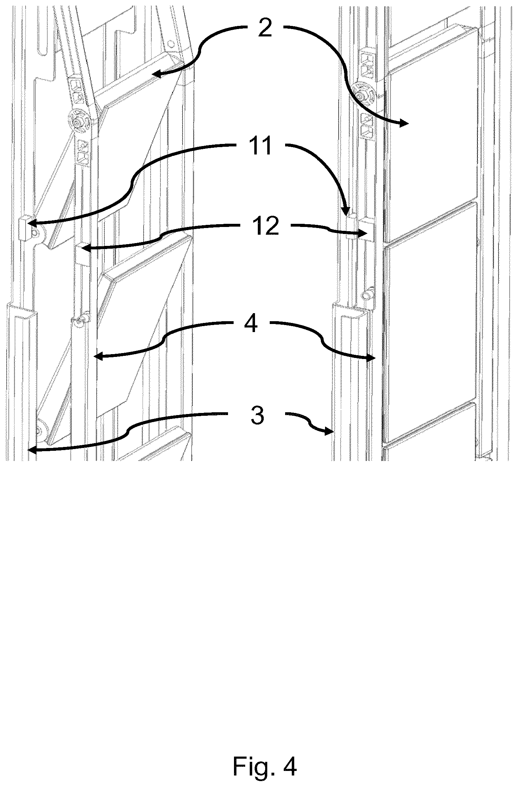

Damit die Klapptreppe 1 im zugeklappten Zustand nicht durch schon geringe Störungen, zum Beispiel beim Bewegen, insbesondere Fahren, des Reisemobils in den aufgeklappten Zustand übergeht, sind verdeckt im Befestigungselement 3 und dem Stützelement 4 Magneten 11, 12 vorgesehen. Zur Verdeutlichung der Anbringung der Magneten zeigt Fig. 4 schematisch und exemplarisch einen vergrößerten Ausschnitt der Klapptreppe in einem halb aufgeklappten und einem geschlossenen Zustand, wobei zum Sichtbarmachen der vorgesehenen Magneten Teile der äußeren Wände des Befestigungselements 3 und des Stützelements 4 entfernt wurden. In dieser Ausführungsform weist das Befestigungselement 3 einen ersten Magneten 11 auf und das Stützelement 4 einen zweiten Magneten 12. Die Magneten sind dabei auf einer Innenseite des Schienenabschnitts 8 des Befestigungselements 3 und innerhalb des Rohres des zweiten Abschnitts 42 des Stützelements 4 von außen für den Nutzer nicht sichtbar angeordnet. Des Weiteren erfolgt die Anordnung des ersten Magneten 11 und des zweiten Magneten 12 so, dass, wie im rechten Teil der Abbildung 4 gezeigt, im geschlossenen Zustand die Magneten nahe beieinanderliegen. Die Magneten sind des Weiteren dabei so gepolt, dass im zugeklappten Zustand eine anziehende Kraft zwischen dem ersten Magneten 11 und dem zweiten Magneten 12 entsteht. Dadurch wird die Klapptreppe in einem geschlossenen Zustand gehalten. Die anziehende Kraft zwischen dem ersten Magneten 11 und dem zweiten Magneten 12 wird dabei so gewählt, dass kleinere Störungen, wie sie zum Beispiel beim Bewegen des Reisemobils auftreten, kein Aufklappen der Klapptreppe auslösen, während es dennoch einem Benutzer leichtfällt, zum Beispiel durch einen kleinen Ruck an einer der Treppenstufen, die Magneten voneinander zu lösen und die Klapptreppe somit in den aufgeklappten Zustand zu überführen.

In den Ansprüchen schließen die Wörter "aufweisen" und "umfassen" nicht andere Elemente aus, und die unbestimmten Artikel "ein" schließen eine Mehrzahl nicht aus.

Die Bezugszeichen in den Ansprüchen sind nicht derart zu verstehen, dass der Gegenstand und der Schutzbereich der Ansprüche durch diese Bezugszeichen eingeschränkt sind.

## Patentansprüche

1. Klapptreppe, wobei die Klapptreppe (1) aufweist:
wenigstens eine Treppenstufe (2) mit einer Oberseite (21) und einer Unterseite (22),
ein Haltesystem (34), geeignet zum Halten der wenigstens einen Treppenstufe (2), wobei die wenigstens eine Treppenstufe (2) beweglich am Haltesystem (34) angebracht ist,
wobei die Klapptreppe (1) einen aufgeklappten Zustand und einen zugeklappten Zustand aufweist,
wobei das Haltesystem (34) dazu geeignet ist, die Klapptreppe so an einer vertikalen Wand anzubringen, dass in dem aufgeklappten Zustand die Oberseite (21) der wenigstens einen Treppenstufe (2) horizontal ausgerichtet ist, um eine Aufstiegshilfe zu bilden, und in dem zugeklappten Zustand die Unterseite (22) der wenigstens einen Treppenstufe (2) parallel mit der Wand ausgerichtet ist,
**dadurch gekennzeichnet, dass** das Haltesystem (34) weiter aufweist:
ein Befestigungselement (3), wobei das Befestigungselement (3) geeignet ist, die Klapptreppe (1) an der Wand anzubringen, und
ein Stützelement (4), wobei das Stützelement (4) dazu geeignet ist, in dem aufgeklappten Zustand die wenigstens eine Treppenstufe (2) zu stützen,
wobei das Stützelement (4) mittels eines Drehschubgelenkes (7) am Befestigungselement (3) angebracht ist und das Drehschubgelenk (7) dazu eingerichtet ist, eine Schubbewegung des Stützelements (4) vertikal entlang des Befestigungselements (3) zu erlauben,
wobei das Befestigungselement (3) einen Schienenabschnitt (8) aufweist, wobei das Stützelement (4) mittels des Drehschubgelenkes (7) an dem Schienenabschnitt (8) des Befestigungselements (3) angebracht ist und das Stützelement (4) dazu geeignet ist, sich mittels des Drehschubgelenkes (7) bei einem Übergang zwischen dem zugeklappten und dem aufgeklappten Zustand entlang des Schienenabschnitts (8) zu bewegen.

2. Klapptreppe nach Anspruch 1, wobei die Klapptreppe dazu geeignet ist, so in die Wand eingelassen zu werden, dass in dem zugeklappten Zustand die Unterseite (22) der wenigstens einen Treppenstufe (2) in einer Flucht mit der Wand ausgerichtet ist.

3. Klapptreppe nach einem der Ansprüche 1 und 2, wobei das Stützelement (4) beweglich am Befestigungselement (3) angeordnet ist.

4. Klapptreppe nach einem der Ansprüche 1 bis 3, wobei die wenigstens eine Treppenstufe (2) mittels eines ersten Drehgelenkes (5) an dem Befestigungselement (3) und mittels eines zweiten Drehgelenkes (6) an dem Stützelement (4) angebracht ist.

5. Klapptreppe nach einem der Ansprüche 1 bis 4, wobei der Schienenabschnitt (8) des Befestigungselements (3) dazu eingerichtet ist, in dem zugeklappten Zustand das Stützelement (4) vollständig aufzunehmen, um ein Ausrichten der Unterseite (22) der wenigstens einen Treppenstufe (2) an der Wand zu ermöglichen.

6. Klapptreppe nach einem der Ansprüche 1 bis 5, wobei das Stützelement (4) weiter aufweist:
einen ersten Abschnitt (41), wobei der erste Abschnitt beweglich an dem Befestigungselement (3) angeordnet ist, und
einen zweiten Abschnitt (42), wobei die wenigstens eine Treppenstufe (2) beweglich an dem zweiten Abschnitt (42) angeordnet ist,
wobei der erste Abschnitt (41) mit dem zweiten Abschnitt (42) über ein Drehgelenk (9) verbunden ist und in einem aufgeklappten Zustand der erste Abschnitt (41) einen Winkel mit der Wand bildet und der zweite Abschnitt (42) vertikal parallel zur Wand verläuft.

7. Klapptreppe nach einem der Ansprüche 1 bis 6, wobei das Befestigungselement (3) einen ersten Magneten (11) aufweist und das Stützelement (4) einen zweiten Magneten (12) aufweist, wobei die Magneten (11, 12) verdeckt so angeordnet und eingerichtet sind, dass in dem zugeklappten Zustand die Magneten die Klapptreppe (1) in dem zugeklappten Zustand halten.

8. Klapptreppe nach einem der vorherigen Ansprüche, wobei sich der Abstand zwischen der Oberseite (21) und der Unterseite (22) der wenigstens einen Treppenstufe (2) im aufgeklappten Zustand mit zunehmender Entfernung von der Wand verringert.

9. Klapptreppe nach einem der vorherigen Ansprüche, wobei die Klapptreppe mehrere Treppenstufen (2) aufweist, wobei Treppenstufen unterhalb einer obersten Treppenstufe bei gleichbleibender Stufenbreite eine größere Trittfläche aufweisen als die oberste Treppenstufe.

10. Klapptreppe nach einem der Ansprüche 1 bis 9, wobei das Befestigungselement ein erstes Befestigungselement ist und das Haltesystem (34) ein zweites Befestigungselement aufweist, wobei das erste und zweite Befestigungselement entsprechend zueinander ausgeführt sind und das erste und zweite Befestigungselement jeweils auf gegenüberliegenden Seiten der wenigstens einen Treppenstufe (2) angeordnet sind.

11. Klapptreppe nach Anspruch 10, wobei das Stützelement (4) ein erstes Stützelement ist und Haltesystem (34) weiter ein zweites Stützelement aufweist, wobei das erste und das zweite Stützelement entsprechend zueinander ausgeführt sind und das erste und das zweite Stützelement jeweils auf gegenüberliegenden Seiten der wenigstens einen Treppenstufe (2) angeordnet sind.

12. Reisemobil, insbesondere ein Pferdetransporter mit einem Wohnbereich, das eine Wand mit einer Klapptreppe nach einem der vorherigen Ansprüche aufweist.

## Claims

1. Folding stairs, wherein the folding stairs (1) comprise:
at least one step (2) comprising an upper side (21) and a lower side (22),
a holding system (34) being adapted to hold the at least one step (2), wherein the at least one step (2) is movably attached to the holding system (34),
wherein the folding stairs (1) comprise an unfolded state and a folded state,
wherein the holding system (34) is adapted to attach the folding stairs to a vertical wall such that in the unfolded state the upper side (21) of the at least one step (2) is horizontally aligned to form a climbing aid and in the folded state the lower side (22) of the at least one step (2) is aligned parallel with the wall,
**characterized in that** the holding system (34) further comprises:
a fastening element (3), wherein the fastening element (3) is adapted to attach the folding stairs (1) to the wall, and
a supporting element (4), wherein the supporting element (4) is adapted to support the at least one step (2) in the unfolded state,
wherein the supporting element (4) is attached to the fastening element (3) by means of a slidable hinge (7), and the slidable hinge (7) is arranged to allow a sliding motion of the supporting element (4) vertically along the fastening element (3),
wherein the fastening element (3) comprises a rail portion (8), wherein the supporting element (4) is attached to the rail portion (8) of the fastening element (3) by means of the slidable hinge (7), and the supporting element (4) is adapted to move along the rail portion (8) by means of the slidable hinge (7) during a transition between the folded and the unfolded state.

2. Folding stairs according to claim 1, wherein the folding stairs are adapted to be embedded into the wall such that in the folded state the lower side (22) of the at least one step (2) is aligned flush with the wall.

3. Folding stairs according to any one of claims 1 and 2, wherein the supporting element (4) is movably positioned on the fastening element (3).

4. Folding stairs according to any one of claims 1 to 3, wherein the at least one step (2) is attached to the fastening element (3) by means of a first hinge (5) and to the supporting element (4) by means of a second hinge (6).

5. Folding stairs according to any one of claims 1 to 4, wherein the rail portion (8) of the fastening element (3) is arranged to completely receive the supporting element (4) in the folded state to allow an alignment of the lower side (22) of the at least one step (2) to the wall.

6. Folding stairs according to any one of claims 1 to 5, wherein the supporting element (4) further comprises:
a first portion (41), wherein the first portion is movably positioned on the fastening element (3), and
a second portion (42), wherein the at least one step (2) is movably positioned on the second portion (42),
wherein the first portion (41) is connected with the second portion (42) via a hinge (9), and in an unfolded state the first portion (41) forms an angle with the wall and the second portion (42) runs vertically parallel to the wall.

7. Folding stairs according to any one of claims 1 to 6, wherein the fastening element (3) comprises a first magnet (11) and the supporting element (4) comprises a second magnet (12), wherein the magnets (11, 12) are covertly positioned and arranged such that in the folded state the magnets hold the folding stairs (1) in the folded state.

8. Folding stairs according to any one of the preceding claims, wherein the distance between the upper side (21) and the lower side (22) of the at least one step (2) decreases in the unfolded state with increasing distance from the wall.

9. Folding stairs according to any one of the preceding claims, wherein the folding stairs comprise several steps (2), wherein steps below an uppermost step comprise a greater tread area than the uppermost step at constant step width.

10. Folding stairs according to any one of claims 1 to 9, wherein the fastening element is a first fastening element and the holding system (34) comprises a second fastening element, wherein the first and second fastening element are realized correspondingly to each other, and the first and second fastening element are, respectively, positioned on opposite sides of the at least one step (2).

11. Folding stairs according to claim 10, wherein the supporting element (4) is a first supporting element and the holding system (34) further comprises a second supporting element, wherein the first and the second supporting element are realized correspondingly to each other, and the first and the second supporting element are, respectively, positioned on opposite sides of the at least one step (2).

12. Caravan, in particular a horse transporter with a living area, comprising a wall with folding stairs according to any one of the preceding claims.

## Revendications

1. Marchepied escamotable, dans lequel le marchepied escamotable (1) présente :
au moins une marche de marchepied (2) avec une face supérieure (21) et une face inférieure (22),
un système de maintien (34) adapté pour maintenir l'au moins une marche de marchepied (2), dans lequel l'au moins une marche de marchepied (2) est installée de manière mobile au niveau du système de maintien (34),
dans lequel le marchepied escamotable (1) présente un état ouvert et un état fermé,
dans lequel le système de maintien (34) est adapté pour installer le marchepied escamotable de telle sorte au niveau d'une paroi verticale que, dans l'état ouvert, la face supérieure (21) de l'au moins une marche de marchepied (2) est orientée de manière horizontale pour former une aide à la montée, et que, dans l'état fermé, la face inférieure (22) de l'au moins une marche de marchepied (2) est orientée de manière parallèle avec la paroi,
**caractérisé en ce que** le système de maintien (34) présente par ailleurs :
un élément de fixation (3), dans lequel l'élément de fixation (3) est adapté pour installer le marchepied escamotable (1) au niveau de la paroi, et
un élément de soutien (4), dans lequel l'élément de soutien (4) est adapté pour soutenir l'au moins une marche de marchepied (2) dans l'état ouvert,
dans lequel l'élément de soutien (4) est installé au niveau de l'élément de fixation (3) au moyen d'un joint articulé cylindrique (7) et le joint articulé cylindrique (7) est mis au point pour permettre un mouvement de poussée de l'élément de soutien (4) de manière verticale le long de l'élément de fixation (3),
dans lequel l'élément de fixation (3) présente une section de rail (8), dans lequel l'élément de soutien (4) est installé au niveau de la section de rail (8) de l'élément de fixation (3) au moyen du joint articulé cylindrique (7) et l'élément de soutien (4) est adapté pour se déplacer au moyen du joint articulé cylindrique (7) le long de la section de rail (8) lors d'un passage entre l'état fermé et l'état ouvert.

2. Marchepied escamotable selon la revendication 1, dans lequel le marchepied escamotable est adapté pour être intégré dans la paroi de telle sorte que, dans l'état fermé, la face inférieure (22) de l'au moins une marche de marchepied (2) est orientée en affleurement avec la paroi.

3. Marchepied escamotable selon l'une quelconque des revendications 1 et 2, dans lequel l'élément de soutien (4) est disposé de manière mobile au niveau de l'élément de fixation (3).

4. Marchepied escamotable selon l'une quelconque des revendications 1 à 3, dans lequel l'au moins une marche de marchepied (2) est installée au niveau de l'élément de fixation (3) au moyen d'un premier joint articulé cylindrique (5) et au niveau de l'élément de soutien (4) au moyen d'un deuxième joint articulé cylindrique (6).

5. Marchepied escamotable selon l'une quelconque des revendications 1 à 4, dans lequel la section de rail (8) de l'élément de fixation (3) est mise au point pour recevoir en totalité dans l'état fermé l'élément de soutien (4) pour permettre un alignement de la face inférieure (22) de l'au moins une marche de marchepied (2) sur la paroi.

6. Marchepied escamotable selon l'une quelconque des revendications 1 à 5, dans lequel l'élément de soutien (4) présente par ailleurs :
une première section (41), dans lequel la première section est disposée de manière mobile au niveau de l'élément de fixation (3), et
une deuxième section (42), dans lequel l'au moins une marche de marchepied (2) est disposée de manière mobile au niveau de la deuxième section (42),
dans lequel la première section (41) est reliée à la deuxième section (42) par l'intermédiaire d'un joint articulé cylindrique (9) et, dans un état ouvert, la première section (41) forme un angle avec la paroi et la deuxième section (42) s'étend de manière verticalement parallèle par rapport à la paroi.

7. Marchepied escamotable selon l'une quelconque des revendications 1 à 6, dans lequel l'élément de fixation (3) présente un premier aimant (11) et l'élément de soutien (4) présente un deuxième aimant (12), dans lequel les aimants (11, 12) sont disposés et mis au point de manière dissimulée de telle sorte que, dans l'état fermé, les aimants maintiennent le marchepied escamotable (1) dans l'état fermé.

8. Marchepied escamotable selon l'une quelconque des revendications précédentes, dans lequel la distance entre la face supérieure (21) et la face inférieure (22) de l'au moins une marche de marchepied (2) se réduit dans l'état ouvert au fur et à mesure que l'éloignement de la paroi augmente.

9. Marchepied escamotable selon l'une quelconque des revendications précédentes, dans lequel le marchepied escamotable présente plusieurs marches de marchepied (2), dans lequel des marches de marchepied, sous une marche de marchepied la plus haute, présentent, pour une largeur de marche constante, une surface praticable plus grande que la marche de marchepied la plus haute.

10. Marchepied escamotable selon l'une quelconque des revendications 1 à 9, dans lequel l'élément de fixation est un premier élément de fixation et le système de maintien (34) est un deuxième élément de fixation, dans lequel le premier et le deuxième élément de fixation sont réalisés de manière à correspondre l'un à l'autre et le premier et le deuxième élément de fixation sont disposés respectivement sur des côtés se faisant face de l'au moins une marche de marchepied (2).

11. Marchepied escamotable selon la revendication 10, dans lequel l'élément de soutien (4) est un premier élément de soutien et le système de maintien (34) présente par ailleurs un deuxième élément de soutien, dans lequel le premier et le deuxième élément de soutien sont réalisés de manière à correspondre l'un à l'autre et le premier et le deuxième élément de soutien sont disposés respectivement sur des côtés se faisant face de l'au moins une marche de marchepied (2).

12. Camping-car, en particulier système de transport de chevaux, avec une zone habitable, qui présente une paroi avec un marchepied escamotable selon l'une quelconque des revendications précédentes.
